# EUROPEAN PATENT SPECIFICATION

(11) **EP 0 247 975 B1**
(45) Date of publication and mention of the grant of the patent: **30.11.1994**
(21) Application number: 87830103.5
(22) Date of filing: 18.03.1987
(51) Int. Cl.: C08F 8/00, C12N 11/02, B01J 20/26

(54) **A polymer support for topo-chemical reactions; a process for its preparation, the support produced and its application**
Polymerträger für topochemische Reaktionen, Verfahren zur Herstellung davon, hergestellte Träger und Verwendung davon
Support polymère pour réactions topochimiques, son procédé de préparation, le support obtenu et son application

(30) Priority: 19.03.1986 IT 4779286
(43) Date of publication of application: 02.12.1987
(73) Proprietor: Ente per le nuove tecnologie, l'energia e l'ambiente (ENEA), I-00198 Roma (IT)
(72) Inventor: Amat di San Filippo, Paolo, I-09100 Cagliari CA (IT); Rinaldi, Augusto, I-09100 Cagliari CA (IT); Sanjust di Teulada,Enrico, I-09100 Cagliari CA (IT); Satta, Giuseppe, I-07100 Sassari SS (IT)
(74) Representative: Tonon, Gilberto

(56) References cited:
- EP-A- 0 082 261
- EP-A- 0 213 719
- EP-A- 0 216 499
- DE-A- 2 719 461
- DE-C- 3 432 569
- LU-A- 81 945
- CHEMICAL ABSTRACTS, vol. 99, no. 22, November 1983, page 41, abstract no.176852n, Columbus, Ohio, US; &JP-A-58 59 204 (MITSUBISHI CHEMICAL INDUSTRIES CO., LTD) 08-04-1983
- CHEMICAL ABSTRACTS, vol 90, no. 12, March 1979, page 30, abstract no. 88278p,Columbus, Ohio, US; & JP-A-78 126 088 (H. EGAWA) 02-11-1978
- CHEMICAL ABSTRACTS, vol 83, no. 10, 8th September 1975, page 52, abstract no.80320f, Columbus, Ohio, US; & SU-A-467 914 (B.N. LASKORIN et al.) 25-04-1975

## Description

The present invention relates to a process for the preparation of a polymeric support for topo-chemical reactions, that is, for reactions localized on particular polymer sites, due to the presence of particularly reactive functional groups. The support produced and its use are also described. The supports according to the present invention function in heterogeneous phase and offer wide possibilities for use in the purification of polluting industrial wastes, in the recovery of heavy metal ions from their solutions, in the rectification or purification of food substances and in biochemical and industrial technologies.

### State of the art

Natural or synthetic protein, glucide and polyacrylamide polymers are well known, which are used for immobilizing ligands of various types, including proteins with enzymatic activity. Also known are some possible uses of some polyacrylonitriles as supports for the immobilization of certain enzymes. However, these polymers exhibit physical and chemical properties which do not allow sufficiently flexible application for a wide range of specific reactions. For example, to the state of the art belong acrylonitrile-based homopolymers which may be prepared with functional groups apt to topo-chemical reactions through the alcoholysis of CN groups, or the Pinner reaction, to form imidoesters. However, these homopolymers show low reactivity due to their extrelemy compact structure arising from the polarity of the CN groups, strongly reducing the number of CN groups on the surface of the polymer. This leads to a low exchange rate (<2%) both for the modification reaction of the CN groups and for the subsequent immobilization or extraction. Furthermore, only the CN groups are modified and so the polymer does not lend itself to the immobilization and specific exchange of a great variety of groups or compounds.

Chemical Abstract No. 176852n, (Vol. 99, 1983) discloses, under the title "Chelating resins", the production of heavy-metal chelating resins through polymerization of polyalkylene glycol dimethacrylate, aromatic polyvinyl compounds (in particular divinylbenzene) and unsaturated nitriles followed by a reaction of the obtained polymer with hydroxylamine. Additionally, Chemical Abstract No. 88278p, (Vol.90, 1979) under the title "Chelating resins and fibers for recovery of uranium from sea water", discloses resins, substantially obtained through the reaction of acrylonitrile and divinylbenzene which are subsequently treated with hydroxylamine to convert nitrile groups to amidoxime groups, to be used for absorbing uranium from sea water.

Other polymers such as the tertiary polymer, known as "Velicren", have properties which make them useful in the textile field but not for exchange reactions. Still others have reticulated structures with mechanical properties inferior to those with linear structures, leading to insolubility in all solvents and so the impossibility of preparing viscous solutions. Furthermore, in this case reticulating substances like divinylbenzene are often used, imparting an aspecific character to the reactions and often denaturing certain immobilized substances like proteins. The polymer according to this invention does not show this aspecific character.

Also, many exchange and immobilization reactions run on polymers take place in homogeneous liquid phase, in the sense that the polymer dissolved in a solvent like dimethylformamide is added to reagents capable of modifying the polymer itself. The polymer is then coagulated from an aqueous solution. In these cases undesirable reactions may take place between the solvent and the reagent, making it difficult to control the properties of the particles of the modified polymer produced.

The disadvantages cited above for products belonging to the state of the art are overcome with the present invention through the preparation of an acrylonitrile based solid with specifically reactive functional groups, selected from a wide range of substances, so that the copolymer can be a valid support for a large number of topo-chemical reactions. Furthermore, through the process according to the present invention, the physical and chemical properties of the product polymer may be controlled, especially with regard to the following:
a) mechanical properties are improved due to a high molecular weight linear structure;
b) specific gravity;
c) specific surface;
d) the presence of numerous reactive groups along the chain as well as CN groups, which are sufficiently polar to allow the specific reactions plus compatibility with numerous solutions.
   This acrylonitrile based solid is prepared by suitable modification of a copolymer of acrylonitrile with particular properties.
   The polymer always exhibits a straight chain structure, or at most regularly branched to a small degree. That is, there is no chemical reticulation of any type. However insolubility in water and many common solvents is ensured by the high degree of packing of the polymer chains, due to the high polarity of the CN groups. This packing is also responsible for the high mechanical strength of the polymer particles.
   The absence of chemical reticulation and the presence of a sufficient percentage of CN groups along the molecular skeleton not only allow for specific reactions and compatibility with numerous solutions, but also allow easy preparation of viscoses in dimethylformamide, dimethylacetamide, acetonitrile or dimethylsulfoxide. These viscoses are readily coagulated in aqueous baths, to prepare particles of any desired shape, or may also be drawn.
   The possibility of preparing viscoses of any desired concentration allows the incorporation of variable quantities of additives to make the particles porous, increasing the active surface area to allow large molecules to enter the pores or modifying the specific gravity. Furthermore, polymer modification and subsequent exchange reactions occur in heterogeneous phase on the coagulated polymer, thus eliminating the disadvantages cited above for known reactions run in homogeneous phase.

Therefore the object of the present invention is a process for the preparation of a polymer support for topo-chemical reactions, based on an acrylonitrile solid, characterized by modification of a copolymer of acrylonitrile with aliphatic comonomers, said copolymer being linear and insoluble in water in a one or more reaction step in heterogeneous phase reaction at temperatures between -5 and +105°C with compounds of general formula:

X - R - Y

in which X may be a halogen, sulfonic, sulfinic, alkoxysulfonylic, sulfydrylic, chlorosulfonylic, phosphonic, chlorophosphonylic, alkoxyphosphonylic-sulfonic, amine or imine group; R may be absent, a carbonyl group, a homocyclic or heterocyclic aromatic radical, a cyclic or acyclic aliphatic radical with from 2 to 18 carbon atoms, which may contain one or more identical or different heteroatoms; Y may be H, OH, -NH₂, a homo- or heterocyclic aromatic radical, a cyclic or acyclic aliphatic radical, which may be separated by a heteroatom and terminate in the group X or the same group X. the compound being excluded where X-R-Y means hydrazine. After the reaction the polymer support prepared acording to the process of the present invention is thus substituted, in each repeating unit, with a widely variable number of new groups reactive in a specific reaction, with certain chemical species which may be fixed to said specific groups.

Other objects of the, present invention include the polymer support for topo-chemical reactions so prepared, as well as its use as an adsorbent material for selective extraction of chemical species from their solutions.

A practical application of the invention lies, for example, in the possibility of using the modifies polymer as an adsorbent material for the selective extraction of proteins in heterogeneous phase, provided that they are dissolved in solvents in which polyacrylonitrile is insoluble. Another application is as a solid support for the immobilization of said proteins. An enzyme immobilized on the support prepared with the process according to the invention imparts to the entire support its enzymatic activity, allowing recovery of the proteins and repeated recycling operations. Also, most immobilized enzymes are more stable over time and more resistant to thermal inactivation than their corresponding soluble molecules.

The support according to the present invention is a copolymer of acrylonitrile which may also be 'modacrylic,' bi-, tri- or tetrapolymer, prepared using known techniques of polyaddition in suspension, emulsion or solution, with radical or ionic promoter. Unlike common fiber polyacrylonitriles, the molecular weight must be sufficient to ensure not only elevated mechanical strength to the formed products, but also a high number of reactive groups along each macromolecular chain (which must be as long as possible).

Monomers which may be used as comonomers include vinyl monomers like acrylic acid, methacrylic acid, vinylacetic acid, methallylformic acid, and related functional derivatives such as esters, amides, anhydrides, chlorides; allylamine, methallylamine, allyl- and methallylsulfonates, maleic anhydride.

The copolymer to be modified using the process according to the present invention must have a molecular weight between 100,000 and 200,000, as a function of the type of comonomer used and the copolymerization ratio with acrylonitrile. Its apparent density may be varied greatly, decreasing it by introducing a vacuolar structure in the solid or increasing it by incorporating suitable inert additives (charges) in the polymer. As a simple comparison it should be noted that the molecular weight of a common fiber polyacrylonitrile with a 91% acrylonitrile content is approximately 50,000; that of a 'modacrylic' polymer with an acrylonitrile content between 35 and 85% is approximately 60,000. The density of a fiber or 'modacrylic' acrylonitrile polymer varies from 1.17 to 1.34 g/ml. The term 'modacrylic' refers not only to the textile field; but also to a modified acrylic polymer within the context of the present invention.

The polyacrylonitrile copolymer support prepared and modified using the process according to the present invention may be further modified with regard to all or some of the functional groups on the comonomer units distributed along the chain. Therefore another object of the present invention is a process for further modification of the support for topo-chemical reactions according to the present invention, by means of reaction with reagents with general formula: 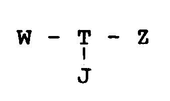
in which the W group may be halogen, -OH, -NH₂, -SH, -SO₂Cl, -SO₃CH₃, -CHO, -COCl, -CN, -PCl₂, a phosphonic radical, chlorophosphonylic, alkoxyphosphonylic, sulfonic, alkoxysulfonylic, sulfidrylic, chlorosulfonylic, sulfinylic, amine or imine; if present, T may be a homo- or heterocyclic aromatic radical, or a cyclic or acyclic aliphatic radical with from 2 to 6 C atoms, which may contain one or more identical or different heteroatoms; Z may be a hydrogen atom or the same as W; J may be absent, or identical to W or Z.

The possible modifications of the polymer are thus numerous and lead to varied possibilities for its use. The possible chemical modifications of the polymer are exceptionally wide. In fact, functionality may be selected during polymerization through a suitable choice of comonomers to be used with the acrylonitrile. However, the already formed polymer particles lend themselves to an extremely broad range of derivativization reactions, under conditions which do not affect the polyacrylonitrilic nature of the matrix, with all that it provides in terms of mechanical strength, chemical and biological durability, and resistance to solvents.

Without resorting to particular scientific explanations, it may be hypothesized that these reactions immobilizing new groups on the polymer, which may be reversible or irreversible, are due to the formation of ionic or covalent bonds, to a polar or dispersive or hydrophobic interaction, or to an adsorption and/or chamisorption in a general or specific fashion, in order to maintain, enhance or modify the original activity of the support itself. For example, reaction with a diamine of formula H₂N-R-NH₂ (where R is a C₂-C₁₈-aliphatic or aromatic radical with one or more identical or different heteroatoms) leads to an anion exchanger wich, on reaction with succinic anhydride, affords a cation exchanger. Reaction with hydroxylamine leads to a resin with hydroxammic acid properties, useful for removing heavy metal ions from their aqueous solutions. Polymers modified by reaction with cystein or dithiopropanol are used for the same purpose.

Reaction with hydrazing affords a hydrazide resin capable of bonding carbonylic compounds and useful in biochemical applications. Hydrazone formation may be used to introduce additional functional groups on the preformed polymer, for example unsubstituted or substituted aromatic rings, which afford a resin useful in studies of hydrophobic interactions with proteins or other compounds of biological interest. Hydrazone formation may also be used for the extraction of low polarity compounds from their solutions. Of course, the carboxylic resins cited above may be treated with thionyl chloride in pyridine and then reacted with variously substituted amines.

The preparation of the polyacrylonitrile copolymer support includes the following steps:
1. Polymerization in distilled water of acrylonitrile and a suitable comonomer, with a molar ratio of comonomer to acrylonitrile between 0 and 1. The number of comonomers may also be greater than 1, with the limitation that the sum of the number of moles of the two or even three comonomers in the ter- or tetrapolymers be equal to the number of moles of comonomer of corresponding bipolymer. Some polymerization initiator may also be added, for example hydroxylamine sodium sulfonate.
2. The filtered, washed and dried polymer is then dissolved in a solvent, for example dimethylformamide, and coagulated in water in the form of granules, drops of filaments.
3. The polymer so prepared is treated with a reagent to introduce the desired modifications in the polymer.
4. The reaction product is filtered, washed, dried and, if desired, treated with other reagents to introduce other partial or total modifications in the polymer.
5. The product is filtered, washed and dried.
   The physical properties of the polymer to be used as support may be modified by the addition of suitable additives to the viscose, to the solution of coagulate, or to both.
   One category of additives has the function of facilitating the formation of empty spaces, allowing increased specific surface area and resulting increased efficiency in separation and exchange processes. Some of these additives are salts, such as NaCl and sodium carboxymethylcellulose, which are added in suspension to the viscose.

In the coagulation phase these additives are dissolved in the aqueous solution and so lead to considrable porosity in the polymer. Other additives in this category, such as starch and polyethyleneglycol, are added to the viscose and then dissolved more or less completely before coagulation.

They are then extracted together with the solvent (for example dimethylformamide) into the aqueous coagulating solution. In this way smaller, but more numerous, empty spaces are created in the coagulate polymer, leading to a more or less spongy structure.

Also included in this category of additives are some surfactants which, when added to the viscose and/or to the coagulating solution, facilitate contact between the heterogeneous phases and so extraction of dimethylformamide.

The surfactants also allow water to penetrate the polymer and so extract salts of the type described above, leading to greater control over porosity.

A second category of additives serves to modify the apparent specific gravity of the polymer so that the modified polymer may be readily separated from the products of the reactions in which it takes part, for example by sedimentation. These additives are added to the viscose and include substances like amorphous SiO₂, BaSO₄, talc, kaolin, alumina, diatomite, expanded perlite.

### Example 1

20g of polymer prepared by the polymerization in aqueous suspension of a certain quantity of acrylonitrile and methylacrylate in a molar ratio of 3.74, with sodium hydroxylaminesulfonate as initiator and an intrinsic viscosity [η] in DMF at 25°C of 1.88, in granule form following coagulation in water from a DMF solution, are treated with heating for 8 hours with excess hydroxylammonium chloride in a solution of a rigorously stoichiometric quantity of NaOH in the minimum amount of water. The product is filtered, washed with water and alcohol, and then dried under vacuum at 60°C. The polymer shows specific binding capacity for Cu²⁺ and Fe³⁺ ions. As measured with common quantitative analysis methods, the capacity is shown to vary between 0.5 and 7 meq/g, as a function of the temperature used during reaction with hydroxylamine.

### Example 2

20g of polymer prepared by the polymerization in aqueous suspension of acrylonitrile and methylacrylate in a molar ratio of 3.74, with sodium hydroxylaminesulfonate as initiator and an intrinsic viscosity [η] in DMF at 25°C of 1.88, in granule form following coagulation in water from a DMF solution, are treated with heating for 24 hours with excess cystamine in anhydrous dioxane. The reaction product is then washed first with dilute aqueous acetic acid, then with saturated NaHCO₃ solution and finally with water, alcohol and ethyl ether. The resulting product, treated with sodium dithionite in aqueous solution, is used for selective fixation of Ag⁺, Hg²⁺, Cu²⁺, Pb²⁺ from their solutions. Expressed as concentration of -SH groups, the capacity of the polymer varies as a function of the temperature of the cystamine reaction, from 1 to 4 meq/g. This is determined by difference, measuring the metal ion concentration with common quantitative analysis methods.

### Example 3

Acrylonitrile and methyacrylate in a molar ratio of 3.74 are polymerized in aqueous suspension for 36 hours at 55°C, using nascent sodium hydroxylaminosulfonate as initiator. The mean viscosimetric molecular weight is 164,000. After washing and drying under vacuum at 60°C, the polymer is formed into granules of mean diameter 0.3mm by coagulation of a dimethylformamide viscose in water with addition of phenylpolyethyleneglycol. The granules are thoroughly washed with water, then with alcohol followed by ether, and then dried under vacuum at 60°C. 20g of the resulting granular polymer are treated with excess N,N'-bis-(3-aminopropyl)-piperazine at 80°C for 36 hours. The reaction product is then washed with water made acid by the addition of acetic acid, water, saturated sodium bicarbonate solution, and then again with water, alcohol and ether, before drying under vacuum at 60°C. The resulting product is then reacted at 60°C for 12 hours with cianuryl chloride, in saturated anhydrous dioxane. The product is washed and dried, and then treated with an excess or commercial catalase (10 mg/ml strength) in 0.1M pH 7 potassium phosphate buffer at 4°C for 12 hours. Prolonged washing with 0.1M potassium phosphate buffer solution and 0.5M NaCl affords a granular polymer mass with catalase action.

## Claims

1. Process for the preparation of a polymer support for topo-chemical reactions based on acrylonitrile solid, characterized by modification of a copolymer of acrylonitrile with aliphatic comonomers, said copolymer being linear and insoluble in water, by introduction of new reactive groups, which react specifically with certain chemical species, by means of a heterogeneous phase reaction in one or more steps with compounds of general formula:
X - R - Y
in which X may be halogen, a sulfonic, alkoxysulfonylic, sulfydrylic, alkoxyphosphonylic, sulfinic, amine or imine group;
R may be absent, a carbonyl group, a homocyclic or heterocyclic aromatic radical, a cyclic or acyclic aliphatic radical with from 2 to 18 carbon atoms, which may contain one or more identical or different heteroatoms;
Y may be H, OH, -NH₂, a homo- or heterocyclic aromatic radical, a cyclic or acyclic aliphatic radical, which may be separated by a heteroatom and terminating in a group , or in the same group X. The compound being excluded where X - R - Y means hydrazine.

2. The process as claimed in claim 1, characterized by including an additional reaction step with specific reagents of the general formula: 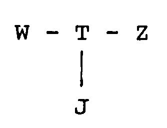 for the introduction of new reactive groups in which the W group may be halogen, -OH, NH₂, -SH, -SO₂Cl, -SO₃CH₃, CHO, -COCl, -CN, -PCl₂, a phosphonic, chlorophosphonylic, alkoxyphosphonylic, sulfonic, alkoxysulfonylic, sulfidrylic, chlorosulfonylic, sulfinilyc, amine or imine radical;
T may be absent, a homo- or heterocyclic aromatic radical, or a cyclic or acyclic aliphatic radical with from 2 to 6 C atoms, which may contain one or more identical or different heteroatoms;
Z may be a hydrogen atom or the same as W;
J may be absent, or identical to W or Z.

3. Process as claimed in claim 1 or claim 2, characterized by the fact that the reaction modifying the copolymer of acrylonitrile is carried out at a temperature between -5 and +105°C.

4. Process as claimed in one of claims 1 to 3, characterized by the fact that the copolymer of acrylonitrile has a molecular weight greater than 100,000and is soluble only in common solvents for copolymers of acrylonitrile.

5. Process as claimed in one of claims 1 to 4, characterized by the fact that the comonomers of the copolymer are chosen from the following group: acrylic acid, methacrylic acid, vinylacetic acid, methallylformic acid, the chlorides, esters or amides of these acids, allylamine, methallylamine, allyl- and methallylsulfonates, maleic anhydride.

6. Process as claimed in one of claims 1 to 5, characterized by the fact that the starting copolymer of acrylonitrile has a molar ratio between comonomers and acrylonitrile of 0 to 1 and that the number of comonomers may also be greater than one, with the limitation that the sum of the moles of the two or three comonomers in the ter- or tetrapolymer is equal to the number of moles in the corresponding bipolymer.

7. Process as claimed in one of claims 1 to 6, in which the copolymer of acrylonitrile is prepared by the polymerization in water of acrylonitrile and a comonomer followed by solution in a solvent, filtration and washing to afford a viscose which is then coagulated in water or aqueous solution to form granules, filaments or drops.

8. Process as claimed in claim 7, in which the solvent is dimethylformamide, dimethylacetamide, acetonitrile or dimethylsulfoxide.

9. Process as claimed in one of claims 1 to 8, in which the polymer viscose solutions are treated with additives to create empty spaces in the coagulate polymer particles, where said additives may be salts, amides or polyethylenglicol.

10. Process as claimed in one of claims 1 to 8, in which the polymer viscose solutions and/or aqueous coagulating solutions are treated with surfactants to facilitate contact under heterogeneous conditions.

11. Process as claimed in one of claims 1 to 8, in which the viscose solutions are treated with additives to modify the apparent specific gravity of the polymer, where said additives may be amorphous SiO₂, BaSO₄, talc, kaolin, allumina, diatomite, expanded perlite.

12. Process as claimed in any one of claims 1 to 11, characterized by the fact that an acrylonitrile/methylacrylate copolymer in the form of granules, filaments and drops is reacted with hydroxylammonium chloride and NaOH, to produce a support with specific ligand capacity for Cu²⁺ and Fe³⁺ ions.

13. Process as claimed in any one of claims 1 to 11, characterized by the fact that an acrylonitrile/methylacrilate copolymer in the form of granules, filaments or drops is reacted with cystamine and the reaction products with sodium dithionite, to prepare a product with specific ligand capacity for Ag⁺, Hg²⁺, Cu²⁺, Pb²⁺.

14. Process as claimed in any one of claims 1 to 11, characterized by the fact that an acrylonitrile/methylacrylate copolymer in the form of granules, filaments or drops is reacted with a diamine of general formula R(NH₂)₂ to produce an anion exchanged compound, which when reacted with succinic anhydride becomes a cation exchanged compound.

15. Process as claimed in any one of claims 1 to 11, characterized by the fact that an acrylonitrile/methylacrylate copolymer in the form of granules, filaments or drops is reacted with N,N'-bis-(3-aminopropyl)-piperazine to prepare a product which is reacted with cyanuryl chloride, to produce a compound capable of fixing protein with catalasic enzymatic action.

16. Polymer support for topo-chemical reactions prepared with the process as claimed in any one of claims 1 to 11.

17. Polymer support for topo-chemical reactions prepared with the process as claimed in claim 13.

18. Polymer support for topo-chemical reactions prepared with the process as claimed in claim 14.

19. Polymer support for topo-chemical reactions prepared with the process as claimed in claim 15.

20. Polymer support for topo-chemical reactions prepared with the process as claimed in claim 16.

21. Use of a support obtained by a reaction between an acrylonitrile/methylacrylate copolymer in the form of granules, filaments or drops with N₂H₄.H₂O to bind aldehydes.

22. Use of the support as claimed in claim 19, to selectively bind Cu⁺ and Fe⁺ ions.

23. Use of the support as claimed in claim 20, to selectively bind Ag⁺, Hg²⁺, Cu²⁺, Pb²⁺ ions.

24. Use of the support as claimed in claim 21, as an anion or cation exchanger.

25. Use of the support as claimed in claim 22, to fix proteins with enwymatic activity, in particular catalase.

## Patentansprüche

1. Verfahren zur Herstellung eines polymeren Trägers für topochemische Reaktionen, der auf einem Acrylnitrilfeststoff basiert und gekennzeichnet ist durch die Modifikation eines Copolymers des Acrylnitrils mit aliphatischen Comonomeren, wobei das Copolymer linear und in Wasser unlöslich ist, und zwar durch Einfügung neuer reaktiver Gruppen, die spezifisch mit bestimmten chemischen Spezies reagieren, mittels einer Reaktion in heterogener Phase in einem oder mehreren Schritten mit Verbindungen der allgemeinen Formel:
X-R-Y
in der X ein Halogen, eine Sulfongruppe, eine Alkoxysulfonylgruppe, eine Sulfidrylgruppe, eine Alkoxyphosphonylgruppe, eine Sulfingruppe, eine Aminogruppe oder eine Iminogruppe darstellen kann, R abwesend, eine Carbonylgruppe, ein homocyclischer oder heterocyclischer aromatischer Rest, ein cyclischer oder acyclischer aliphatischer Rest mit 2 bis 18 Kohlenstoffatomen, der ein oder mehrere identische oder unterschiedliche Heteroatome enthalten kann, sein kann und Y ein -H, ein -OH, ein -NH₂, einen homo- oder heterocyclischen aromatischen Rest und einen cyclischen oder acyclischen aliphatischen Rest, der durch ein Heteroatom abgetrennt sein kann und mit einer Gruppe endet, oder die gleiche Gruppe X darstellen kann, wobei die Verbindung, bei der X-R-Y Hydrazin bedeutet, ausgeschlossen ist.

2. Verfahren nach Anspruch 1, das gekennzeichnet ist durch Einschließen eines zusätzlichen Reaktionsschrittes mit spezifischen Reagenzien der allgemeinen Formel: 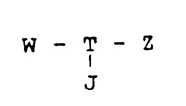 zur Einführung neuer reaktiver Gruppen, wobei in der Formel die W-Gruppe ein Halogen, ein -OH, ein -NH₂, ein -SH, ein -SO₂Cl, ein -SO₃CH₃, ein -CHO, ein -COCl, ein -CN, ein -PCl₂, einen Phosphonrest, einen Chlorphosphonylrest, einen Alkoxyphosphonylrest, einen Sulfonrest, einen Alkoxysulfonylrest, einen Sulfidrylrest, einen Chlorsulfonylrest, einen Sulfinylrest, einen Aminorest oder einen Iminorest darstellen kann, T abwesend, ein homo- oder heterocyclischer aromatischer Rest oder ein cyclischer oder acyclischer aliphatischer Rest mit 2 bis 6 Kohlenstoffatomen, der ein oder mehrere identische oder unterschiedliche Heteroatome enthalten kann, sein kann, Z ein Wasserstoffatom oder das gleiche wie W darstellen kann und J abwesend oder identisch mit W oder Z sein kann.

3. Verfahren nach den Ansprüchen 1 oder 2, dadurch gekennzeichnet, daß die Reaktion, die das Copolymer des Acrylnitrils modifiziert, bei einer Temperatur zwischen -5 und +105°C durchgeführt wird.

4. Verfahren nach einem der Ansprüche 1 bis 3, dadurch gekennzeichnet, daß das Copolymer des Acrylnitrils ein Molekulargewicht von mehr als 100000 besitzt und nur in gebräuchlichen Lösungsmitteln für Copolymere des Acrylnitrils löslich ist.

5. Verfahren nach einem der Ansprüche 1 bis 4, dadurch gekennzeichnet, daß die Comonomere des Copolymers aus der folgenden Gruppe ausgewählt sind: Acrylsäure, Methacrylsäure, Vinylessigsäure, Methallylameisensäure, den Chloriden, Estern oder Amiden dieser Säuren, Allylamin, Methallylamin, Allyl- und Methallylsulfonaten und Maleinsäureanhydrid.

6. Verfahren nach einem der Allsprüche 1 bis 5, dadurch gekennzeichnet, daß das Ausgangscopolymer des Acrylnitrils ein molares Verhältnis zwischen Comonomeren und Acrylnitril von 0 bis 1 besitzt und die Anzahl der Comonomeren auch größer als eins sein kann, mit der Einschränkung, daß die Summe der Mole der zwei oder drei Comonomeren in dem Ter- oder Tetrapolymeren gleich der Molzahl in dem entsprechenden Bipolymeren ist.

7. Verfahren nach einem der Ansprüche 1 bis 6, in dem das Copolymer des Acrylnitrils hergestellt wird durch Polymerisation von Acrylnitril und einem Comonomeren in Wasser, wonach in einem Lösungsmittel gelöst, filtriert und gewaschen wird, wodurch eine Viskose erhalten wird, die dann in Wasser oder wäßriger Lösung koaguliert wird, um Körnchen, Fibrillen oder Tropfen zu bilden.

8. Verfahren nach Anspruch 7, in dem das Lösungsmittel Dimethylformamid, Dimethylacetamid, Acetonitril oder Dimethylsulfoxid ist.

9. Verfahren nach einem der Ansprüche 1 bis 8, in dem die polymeren Viscoselösungen mit Zusätzen behandelt werden, um Leerräume in den koagulierten Polymerteilchen zu erzeugen, wobei die Zusätze Salze, Amide oder Polyethylenglycol sein können.

10. Verfahren nach einem der Ansprüche 1 bis 8, in dem die polymeren Viscoselösungen und/oder wäßrige Koagulationslösungen mit oberflächenaktiven Stoffen behandelt werden, um einen Kontakt unter heterogenen Bedingungen zu erleichtern.

11. Verfahren nach einem der Ansprüche 1 bis 8, in dein die Viscoselösungen mit Zusätzen behandelt werden, um das scheinbare spezifische Gewicht des Polymers zu modifizieren, wobei die Zusätze amorphes SiO₂, BaSO₄, Talk, Kaolin, Tonerde, Kieselgur und geschäumtes Perlit sein können.

12. Verfahren nach einem der Ansprüche 1 bis 11, dadurch gekennzeichnet, daß ein Copolymer aus Acrylnitril und Methylacrylat in Form von Körnchen, Fibrillen und Tropfen mit Hydroxylammoniumchlorid und NaOH umgesetzt wird, um einen Träger mit spezifischer Ligandenkapazität für Cu²⁺- und Fe³⁺-Ionen herzustellen.

13. Verfahren nach einem der Ansprüche 1 bis 11, dadurch gekennzeichnet, daß ein Copolymer aus Acrylnitril und Methylacrylat in Form von Körnchen, Fibrillen oder Tropfen mit Cystamin umgesetzt wird und die Reaktionsprodukte mit Natriumdithionit umgesetzt werden, um ein Produkt mit spezifischer Ligandenkapazität für Ag⁺, Hg²⁺, Cu²⁺und Pb²⁺ herzustellen.

14. Verfahren nach einem der Ansprüche 1 bis 11, dadurch gekennzeichnet, daß ein Copolymer aus Acrylnitril und Methylacrylat in Form von Körnchen, Fibrillen oder Tropfen mit einem Diamin der allgemeinen Formel R(NH₂)₂ umgesetzt wird, um eine Anionenaustauscherverbindung herzustellen, die, wenn sie mit Bernsteinsäureanhydrid umgesetzt wird, zu einer Kationenaustauscherverbindungwird.

15. Verfahren nach einem der Ansprüche 1 bis 11, dadurch gekennzeichnet, daß ein Copolymer aus Acrylnitril und Methylacrylat in Form von Körnchen, Fibrillen oder Tropfen mit N,N'-Bis-(3-aminopropyl)-piperazin umgesetzt wird, um ein Produkt herzustellen, das mit Cyanurchlorid umgesetzt wird, um eine Verbindung herzustellen, die zum Fixieren von Protein mit katalaseartiger emzymatischer Wirkung fähig ist.

16. Polymerer Träger für topochemische Reaktionen, der mit dem Verfahren nach einem der Ansprüche 1 bis 11 hergestellt wird.

17. Polymerer Träger für topochemische Reaktionen, der mit dem Verfahren nach Anspruch 13 hergestellt wird.

18. Polymerer Träger für topochemische Reaktionen, der mit dem Verfahren nach Anspruch 14 hergestellt wird.

19. Polymerer Träger für topochemische Reaktionen, der mit dem Verfahren nach Anspruch 15 hergestellt wird.

20. Polymerer Träger für topochemische Reaktionen, der mit dem Verfahren nach Anspruch 16 hergestellt wird.

21. Verwendung eines Trägers, der durch die Reaktion eines Copolymers aus Acrylnitril und Methylacrylat in Form von Körnchen, Fibrillen und Tropfen mit N₂H₄·H₂O erhalten wird, um Aldehyde zu binden.

22. Verwendung des Trägers nach Anspruch 19, um selektiv Cu⁺- und Fe⁺-Ionen zu binden.

23. Verwendung des Trägers nach Anspruch 20, um selektiv Ag⁺-, Hg⁺-, Cu²⁺-und Pb²⁺-Ionen zu binden.

24. Verwendung des Trägers nach Anspruch 21 als Anionen- oder Kationenaustauscher.

25. Verwendung des Trägers nach Anspruch 22, um Proteine mit enzymatischer Aktivität, insbesondere Katalase, zu fixieren.

## Revendications

1. Procédé de préparation d'un polymère support pour réactions topo-chimiques, à base d'acrylonitrile solide caractérisé :
en ce qu'il consiste à modifier un copolymère d'acrylonitrile au moyen de comonomères aliphatiques, le dit copolymère étant linéaire et insoluble dans l'eau, grâce à l'introduction de nouveaux groupes réactifs qui réagissent spécifiquement avec certains composés chimiques, par mise en réaction en phase hétérogène en une ou plusieurs étapes de composés de formule générale :
X - R - Y
dans laquelle :
- X peut être un groupe halogène, sulfonique, alkoxysulfonylique, sulfydrylique, alkoxyphosphonylique, amine ou imine ;
- R peut être soit absent, soit être un groupe carbonyl, un radical aromatique hétérocyclique ou homocyclique, un radical cyclique ou un radical acyclique aliphatique avec de 2 à 18 atomes carboniques, lesquels radicaux peuvent contenir un ou plusieurs heteroatomes identiques ou différents ;
- Y peut être H, OH, -NH₂, un radical aromatique homo ou hétérocylcique, un radical cyclique ou acyclique aliphatique qui peut être séparé par un hétéroatome et finissant dans un groupe, ou dans le même groupe X ; étant exclu le composé dans lequel X-R-Y comprend l'hydrazine;

2. Procédé selon la revendication 1, caractérise :
en ce qu'il comprend une étape de réaction supplémentaire avec des réactifs spécifiques de formule générale : 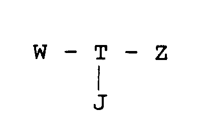 en vue de l'introduction de nouveaux groupes réactifs dans laquelle :
le groupe W peut être : un halogène, -OH, -NH₂ , -SH, -SO₂Cl, -SO₃CH₃, CHO, -COCl, -CN, -PCl₂ , un radical phosphonique, chlorophosphonylique,alkoxyphosphonylique, ,sulfonique, alkoxysulfonylique, sulfidrylique, chlorosulfonylique, sulfinilyque, amine et imine,
T peut soit être absent, soit être un radical aromatique homo ou hétérocyclique, ou un radical cyclique ou acyclique aliphatique avec de 2 à 6 atomes C, qui peuvent contenir un ou plusieurs hétéroatomes identiques ou différents,
Z peut soit être un atome d'hydrogène, ou être identique à W,
J peut soit être absent, soit être identique à W ou Z;

3. Procédé selon l'une quelconque des revendications 1 ou 2, caractérisé :
en ce que la réaction modifiant le copolymère d'acrylonitrile est effectuée à une température comprise entre -5 et +100°C;

4. Procédé selon l'une quelconque des revendications 1 à 3, caractérisé :
en ce que le copolymère d'acrylonitrile a un poids moléculaire supérieur à 100.000 et est soluble seulement dans des solvants communs des copolymères d'acrylonitrile;

5. Procédé selon l'une quelconque des revendications 1 à acide acrylique, acide méthacrylique, acide vinylacétique, acide méthallylformique, les chlorures, les esters ou amides de ces acides, l'allylamine, la méthallylamine, les allyl- et méthallyl sulfonates, l'anhydride maléique;

6. Procédé selon l'une quelconque des revendications 1 à 5, caractérisé :
en ce que le copolymère d'acrylonitrile de départ a un rapport molaire entre les comonomères et l'acrylonitrile compris entre 0 et 1, et en ce que le nombre de comonomères peut être supérieur à un, avec comme limitation que la somme des molécules des deux ou trois comonomères dans le tri- ou tétrapolymère est égale au nombre de molécules dans le bipolymère correspondant;

7. Procédé selon l'une quelconque des revendications 1 à 6, caractérisé :
en ce que le copolymère d'acrylonitrile est préparé par polymérisation dans l'eau, de l'acrylonitrile et d'un comonomère, suivie d'une dissolution dans un solvant, d'une filtration et d'un lavage jusqu'à obtention d'une viscose qui est alors coagulée dans l'eau ou dans une solution aqueuse pour former des granules, des filaments ou des gouttelettes;

8. Procédé selon la revendication 7, caractérisé :
en ce que le solvant est de la diméthylformamide, de la diméthylacétamide, de l'acétonitrile ou du diméthylsulfoxide.

9. Procédé selon l'une des revendications 1 à 8, caractérisé :
en ce que les solutions de viscose du polymère sont traitées avec des additifs pour créer des vides dans les particules du polymère coagulé, les dits additifs pouvant être des sels, des amides ou du polyéthylenglicol;

10. Procédé selon l'une quelconque des revendications 1 à 8, caractérisé :
en ce que les solutions de viscose du polymère et/ou les solutions de coagulum aqueux sont traitées avec des agents de surface pour faciliter le contact en milieu hétérogène;

11. Procédé selon l'une quelconque des revendications 1 à 8, caractérisé en ce que les solutions de viscose sont traitées par des additifs destinés à modifier le poids spécifique apparent du polymère, lesdits additifs pouvant être SiO₂ amorphe, BaSO₄, du talc, du kaolin, de l'alumine, de la diatomite, de la perlite expansée;

12. Procédé selon l'une quelconque des revendications 1 à 11, caractérisé :
en ce qu'un copolymère d'acrylonitrile/méthylacrylate sous forme de granules, filaments ou gouttelettes est mis à réagir avec le chlorure d'hydroxylammonium et NaOH en vue de produire un support ayant une capacité de complexant spécifique des ions Cu²⁺ et Fe³⁺;

13. Procédé selon l'une quelconque des revendications 1 à 11, caractérisé :
en ce qu'un copolymère d'acrylonitrile/méthylacrilate sous forme de granules, filaments ou gouttelettes est mis à réagir avec la cystamine, et les produits de la réaction avec du ditnionite de sodium, pour former un produit ayant une capacité de complexant spécifique des ions Ag⁺, Hg²⁺, Cu²⁺, Pb²⁺;

14. Procédé selon l'une quelconque des revendications 1 à 11, caractérisé :
en ce qu'un copolymère d'acrylonitrile/méthylacrylate sous forme de granules, filaments ou gouttelettes est mis à réagir avec une diamine de formule générale R(NH₂)₂ en vue de produire un échangeur d'anions, qui, mis à réagir avec l'anhydride succinique, devient un échangeur de cations;

15. Procédé selon l'une quelconque des revendications 1 à 11, caractérisé :
en ce qu'un copolymère d'acrylonitrile/méthylacrylate sous forme de granules, filaments ou gouttelettes est mis à réagir avec la N,N'-bis-(3-aminopropyl)-pipérazine pour former un produit qui est mis à réagir avec le chlorure de cyanuryl pour produire un composé capable de fixer les protéines avec action catalytique enzymatique;

16. Polymère support pour des réactions topo-chimiques préparées selon le procédé de n'importe laquelle des revendications 1 à 11.

17. Polymère support pour des réactions topo-chimiques préparées selon le procédé de la revendication 13;

18. Polymère support pour des réactions topo-chimiques préparées selon le procédé de la revendication 14;

19. Polymère support pour des réactions topo-chimiques préparées selon le procédé de la revendication 15;

20. Polymère support pour des réactions topo-chimiques préparées selon le procédé de la revendication 16;

21. Utilisation d'un support obtenu par une réaction entre un copolymère d'acrylonitrile/ méthylacrylate sous forme de granules, filaments ou gouttelettes avec N₂H₄.H₂O pour fixer les aldéhydes;

22. Utilisation du support selon la revendication 19, pour complexer sélectivement les ions Cu⁺ et Fe⁺;

23. Utilisation du support selon la revendication 20, pour complexer sélectivement les ions Ag⁺, Hg²⁺, Cu²⁺, Pb²⁺;

24. Utilisation du support selon la revendication 21, comme échangeur d'anions ou de cations;

25. Utilisation du support selon la revendication 22, pour fixer les protéines à activité enzymatique, en particulier la catalase;
